# EUROPEAN PATENT SPECIFICATION

(11) **EP 0 957 259 B1**
(45) Date of publication and mention of the grant of the patent: **17.03.2004**
(21) Application number: 99109451.7
(22) Date of filing: 11.05.1999
(51) Int. Cl.: F02M 37/00, F02B 63/06, F02M 37/06

(54) **Internal combustion engine**
Brennkraftmaschine
Moteur à combustion interne

(30) Priority: 11.05.1998 JP 12796498; 14.05.1998 JP 13092798
(43) Date of publication of application: 17.11.1999
(73) Proprietor: YAMAHA HATSUDOKI KABUSHIKI KAISHA, Iwata-shi Shizuoka-ken (JP)
(72) Inventor: Takano, Tomotaka, Iwata-shi, Shizuoka-ken (JP)
(74) Representative: Grünecker, Kinkeldey, Stockmair & Schwanhäusser Anwaltssozietät

(56) References cited:
- US-A- 5 295 463
- US-A- 5 769 611

## Description

This invention relates to an internal combustion engine comprising at least one camshaft with cams, said camshaft being axially supported for a rotation on a journal bearing portion of a cylinder head and by a cam cap, a fuel pump for supplying fuel to an injector for injecting fuel into a combustion chamber, said fuel pump being drivable by said camshaft, as disclosed for example in US-A-5 769 611.

Engines to be mounted on vehicles include one, for example, in which a camshaft of a valve movement mechanism is axially supported for rotation by means of a journal bearing portion of a cylinder head and a cam cap, and is provided with a fuel pump for supplying fuel to an injector for injecting fuel, with the fuel pump being driven with the camshaft.

The fuel pump is attached for example to a separate, dedicated attachment cover attached to the cylinder head.

Attaching the fuel pump to the separate, dedicated attachment cover attached to the cylinder head increases the number of separate parts, cost, overall length, and weight of the engine.

Accordingly, it is an objective of the present invention to provide an internal combustion engine as indicated above which facilitates a reliable attachment of the fuel pump and, simultaneously, the reduction of costs, weight and size of the internal combustion engine.

According to the present invention, this objective is solved for an internal combustion engine as indicated above in that said fuel pump comprises an integral pump attachment portion opposite a first attachment portion of the cylinder head and a second attachment portion of the cam cap for attaching the fuel pump, and that the fuel pump being attached to the opposing first attachment portion of the cylinder head and to the second pump attachment portion of the cam cap.

According to an advantageous embodiment of the present invention, said first and second pump attachment portions each are integrally formed with said cylinder head and said cam cap, respectively. In that case, special attachment members are not necessary. In addition, this reduces the weight and the size of the internal combustion engine. Moreover, this integral structure has also the advantage of securing rigidity.

According to another embodiment of the invention, the pump has an integral pump attachment portion opposite a side portion of the cylinder head and a side portion of the cam cap for attaching the fuel pump. As a result, a separate, dedicated attachment member is unnecessary, weight and size of the engine are reduced accordingly, and the integral structure secures rigidity.

In addition, according to a further embodiment of the invention, the cam cap is provided with a cam sensor attachment portion between a camshaft receiving portion for supporting the camshaft and the pump attachment portion, and that a cam sensor is attached to the cam sensor attachment portion.

With this further embodiment, space is effectively used and the rigidity of the cam cap is increased as the camshaft receiving portion, the pump attachment portion, and the cam sensor attachment portion are formed integrally with the cam cap.

In this case, it is advantageous when the head cover is supported at the cam sensor attachment portion of the cam cap.

Therefore, it is possible that the attachment of the head cover becomes more reliable as the head cover is supported at the cam sensor attachment portion of the cam cap.

Other preferred embodiments of the present invention are laid down in further dependent claims.

In the following, the present invention is explained in greater detail with respect to several embodiments thereof in conjunction with the accompanying drawings, wherein:
FIG. 1 is a plan view of an internal combustion engine,
FIG. 2 is a side view of the internal combustion engine,
FIG. 3 is a cross-sectional view showing the attachment of a fuel pump and a cam sensor,
FIG. 4 shows the fuel pump for the internal combustion engine,
FIG. 5 is a cross-sectional view taken along the line V-V in FIG. 1, and
FIG. 6 is a cross-sectional view taken along the line VI-VI in FIG. 1.

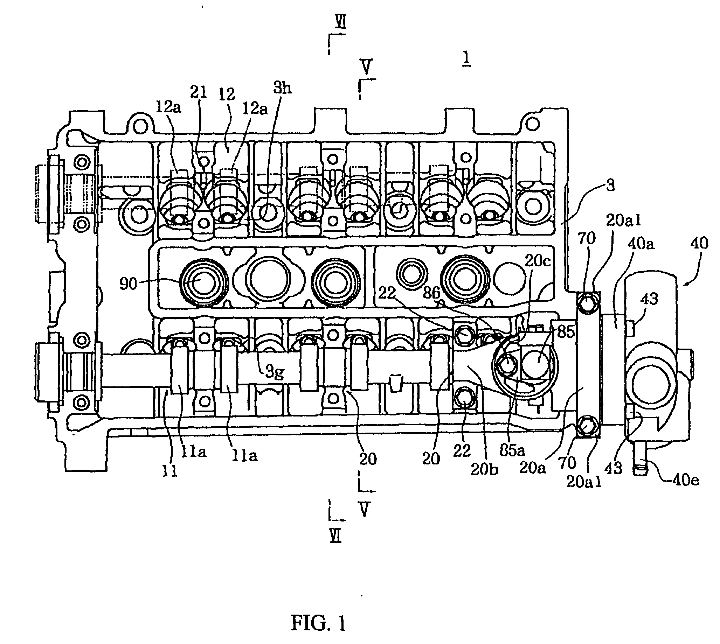

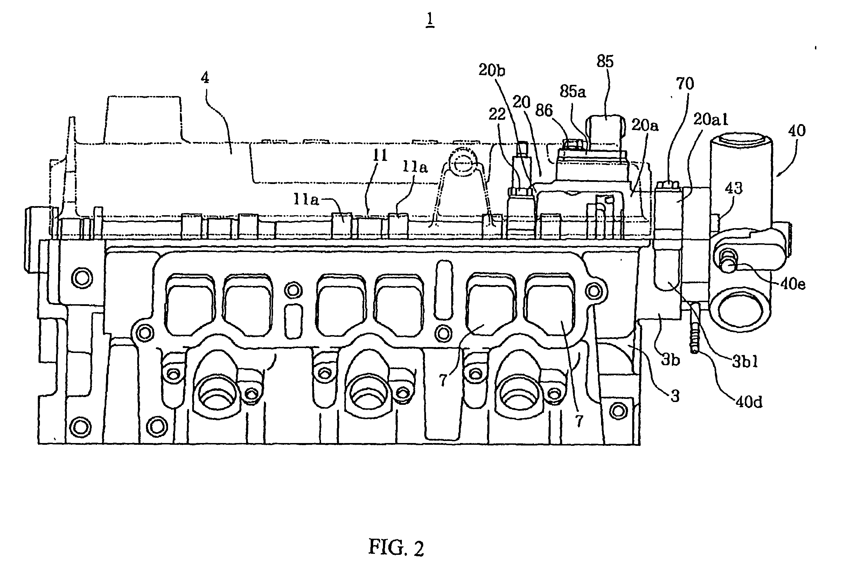

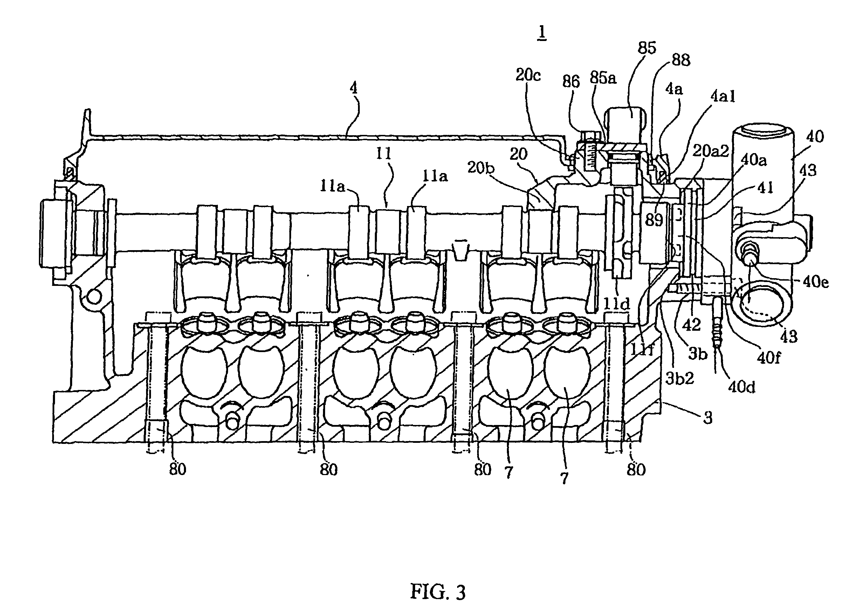

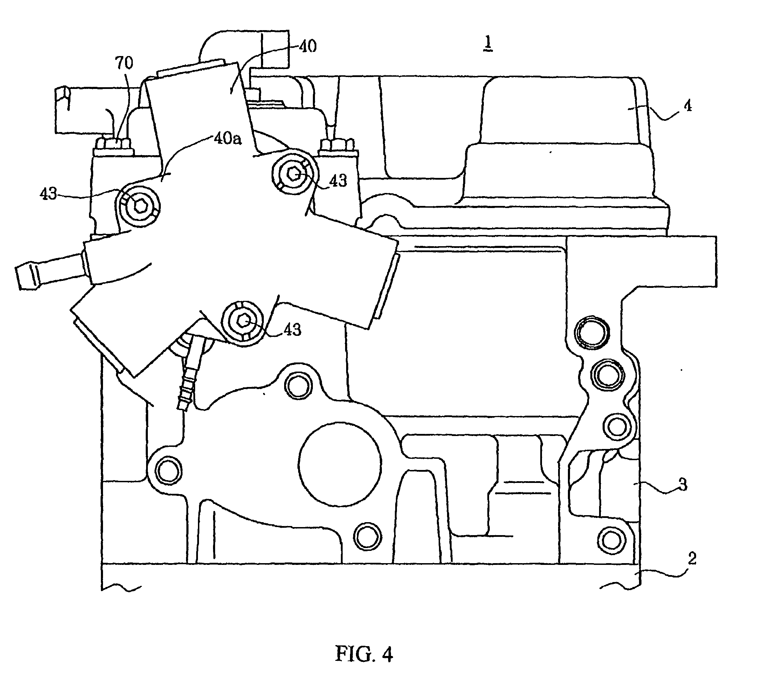

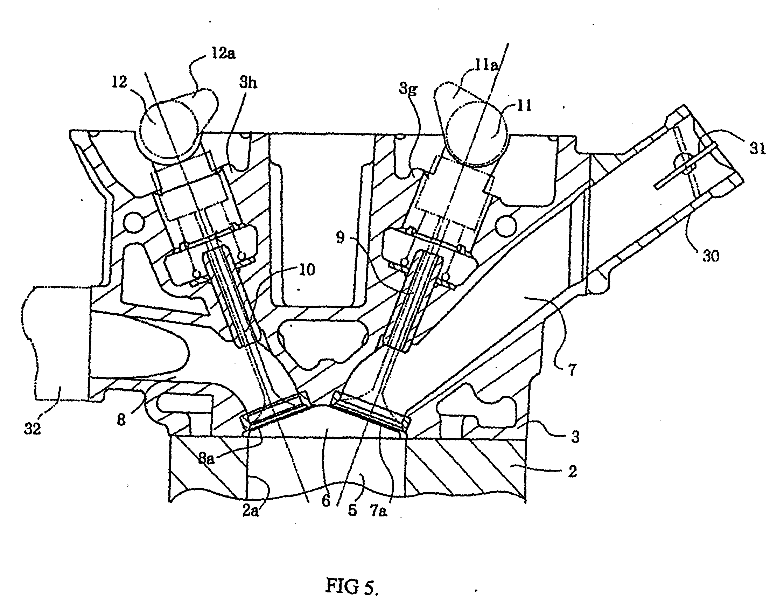

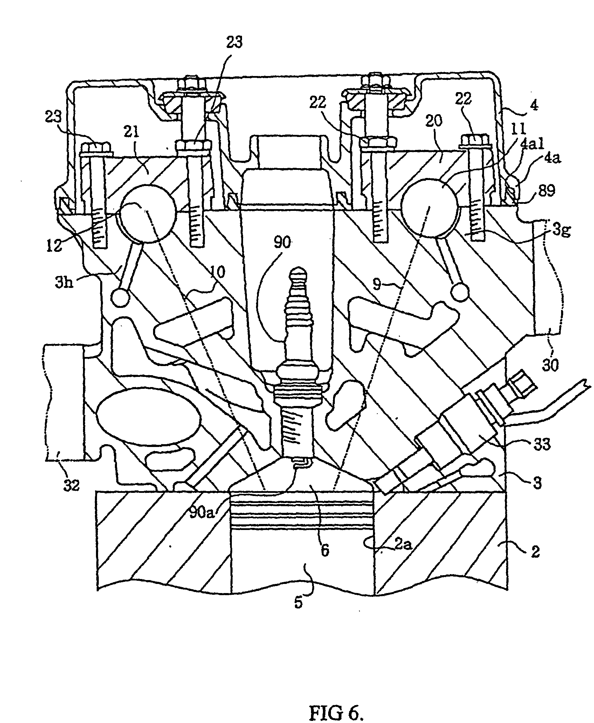

An embodiment of the invention will be hereinafter described in reference to the appended drawings. FIG. 1 is a plan view of an internal combustion engine. FIG. 2 is a side view of the internal combustion engine. FIG. 3 is a cross-sectional view showing the attachment of a fuel pump and a cam sensor. FIG. 4 shows the fuel pump for the internal combustion engine. FIG. 5 is a cross-sectional view taken along the line V-V in FIG. 1. FIG. 6 is a cross-sectional view taken along the line VI-VI in FIG. 1.

This internal combustion engine is of an in-line, three-cylinder, four-stroke-cycle type, and comprises a cylinder block 2, and a cylinder head 3 attached over the cylinder block 2 by means of tightening bolts 80 passing through the cylinder head 3 and screwed into the cylinder block 2. To the cylinder head 3 is further secured a head cover 4. A piston 5 is disposed for reciprocating in each cylinder 2a formed in the cylinder block 2. A combustion chamber 6 is formed with the piston 5 and the cylinder head 3.

Two intake passages 7 and two exhaust passages 8 respectively corresponding to each of the three cylinders are formed in the cylinder head 3, with the openings 7a of the intake passages 7 and the openings 8a of the exhaust passages 8 made to face each combustion chamber 6. An intake pipe 30 communicating with the intake passages 7 is attached to the cylinder head 3. A swirl control valve 31 for controlling the amount of intake air and for producing a swirl flow in a low revolution range is disposed in the intake pipe 30. An exhaust pipe 32 communicating.with the exhaust passages 8 is also attached to the cylinder head 3. The cylinder head 3 is also provided with an injector 33 constituted to inject fuel directly into the combustion chamber 6.

Intake valves 9 and exhaust valves 10 for opening and closing the intake passages 7 and the exhaust passages 8, respectively, are provided in the cylinder head 3. For each cylinder, an ignition plug 90 is provided in the central part of the cylinder head 3, with its igniting portion 90a facing the center of the combustion chamber 6.

The intake valve 9 and the exhaust valve 10 are similar to each other in constitution. Camshafts 11 and 12 of a valve drive mechanism are disposed over the intake valves 9 and the exhaust valves 10 and made rotatable in journal bearing portions 3g and 3h formed in the cylinder head 3. Cam caps 20 and 21 are tightened over the journal bearing portions 3g and 3h by means of bolts 22 and 23.

The camshaft 11 on the intake side is provided with cams 11a at positions corresponding to the intake valves 9. The camshaft 12 on the exhaust side is formed with cams 12a at positions corresponding to the exhaust valves 10. The camshafts 11 and 12 are provided with gears (not shown) so that the camshafts rotate as interlocked with the crankshaft. As the camshafts 11 and 12 rotate, the cams 11a drive the intake valves 9 while the cams 12a drive the exhaust valves 10 to open and close the openings 7a of the intake passages 7 and the openings 8a of the exhaust passages 8 with predetermined timing.

A side in the camshaft direction of the cylinder head 3 has an integrally formed, pump attachment .portion 3b for attaching a fuel pump 40. A cam cap 20 disposed on the side in the camshaft direction of the cylinder head 3 has an integrally formed, pump attachment portion 20a for attaching the fuel pump 40. The pump attachment portion 3b of the cylinder head 3 and the pump attachment portion 20a of the cam cap 20 are located opposite to each other in under and over relation, with tightening bolts 70 passed from above through both sides 20a1 of the pump attachment portion 20a and screwed into the bolt receiving portions 3b1 of the pump attachment portion 3b to put together both components.

The mutually opposing pump attachment portion 3b of the cylinder head 3 and the pump attachment portion 20a of the cam cap 20 are respectively provided with recesses 3b2 and 20a2 into which the attachment portion 40a of the fuel pump 40 is fit and installed. A sealing member 42 is interposed between the recesses 3b2, 20a2 and the attachment portion 40a of the fuel pump 40 and tightened with three bolts 43 passed through the attachment portion 40a in the side direction of the cylinder head 3 and screwed into the side portion of the cylinder head 3.

The fuel pump 40 for supplying fuel to the injector 33 for injecting fuel is arranged as described above, and is provided with a fuel inlet portion 40d and a fuel outlet portion 40e. The fuel delivered from the fuel outlet portion 40e is sent to the injector 33. The driven portion 40f of the fuel pump 40 is made to engage with the fore-end portion 11f of the camshaft 11 so that the fuel pump 40 is driven by the rotation of the camshaft 11.

The fuel pump 40 has the integrally formed pump attachment portion 40a facing the side portions of the cylinder head 3 and the cam cap 20. The fuel pump 40 is attached to the opposing pump attachment portion 3b of the cylinder head 3 and the pump attachment portion 20a of the cam cap 20.

Forming the pump attachment portions 3b and 20a integrally with the side portions of the cylinder head 3 and the cam cap 20 respectively as described above makes a separate, special attachment member unnecessary, and reduces weight and size accordingly. The integral structure has also the advantage of securing rigidity.

The cam cap 20 is provided with a cam sensor attachment portion 20c between the pump attachment portion 20a and a camshaft receiving portion 20b for supporting the camshaft 11. A cam sensor 85 for detecting cam angles is attached to the cam sensor attachment portion 20c. The attachment portion 85a of the cam sensor 85 is tightened and secured to the cam sensor attachment portion 20c of the cam cap 20 by means of a bolt 86. The cam sensor 85 is disposed opposite to the irregular-shaped angle detecting portion 11d of the cam shaft 11.

Forming the camshaft receiving portion 20b, the pump attachment portion 20a, and the cam sensor attachment portion 20c integrally on the cam cap 20 makes it possible to efficiently use the space while increasing the rigidity of the cam cap 20.

The cam sensor attachment portion 20c of the cam cap 20 is inserted into the attachment hole 88 of the head cover 4. A seal member 89 is made to engage with the recessed portion 4a1 of the attachment portion 4a of the head cover 4. The head cover 4 is attached to the cylinder head 3 after placing the seal member 89 of the attachment portion 4a on the top surface of the cylinder head 3. In this way, the attachment of the cam cap 20 is made more reliable as the cam cap 20 is supported on the head cover 4 utilizing the attachment portion 20c of the cam cap 20.

As described above, according to the invention the fuel pump has the integral pump attachment portion opposite the side portion of the cylinder head and the side portion of the cam cap, and the fuel pump is attached to the opposing side portions. Since the pump attachment portion is integral with the fuel pump, a separate, dedicated attachment member is unnecessary and accordingly the weight and size of the engine are reduced, and the integral structure secures rigidity.

According to another the cam cap is provided with the cam sensor embodiment of the invention, attachment portion between the camshaft receiving portion and the pump attachment portion, and the cam sensor is attached to the cam sensor attachment portion. Since the pump attachment portion and the cam sensor attachment portion are integral with the cam cap, space is effectively used and the rigidity of the cam cap is increased.

According to a further the attachment of the cam cap becomes more embodiment of the invention, reliable as the head cover is supported at the cam sensor attachment portion of the cam cap, utilizing the cam sensor attachment portion.

## Claims

1. Internal combustion engine (1) comprising at least one camshaft (11,12) with cams (11a,12a), said camshaft (11,12) being axially supported for a rotation on a journal bearing portion (3g,3h) of a cylinder head (3) and by a cam cap (20), a fuel pump (40) for supplying fuel to an injector (33) for injecting fuel into a combustion chamber (6), said fuel pump (40) being drivable by said camshaft (11), **characterized in that** said fuel pump (40) comprising an integral pump attachment portion (40a) opposite a first attachment portion (3b) of the cylinder head (3) and a second attachment portion (20a) of the cam cap (20) for attaching the fuel pump (40), and that the fuel pump (40) being attached to the opposing first attachment portion (3b) of the cylinder head (3) and to the second pump attachment portion (20a) of the cam cap (20).

2. Internal combustion engine according to claim 1, **characterized in that** said first and second pump attachment portions (3b,20a) being fastened via bolts (70).

3. Internal combustion engine according to claim 1 or 2, **characterized in that** said first and second attachment portions (3b,20a) each being provided with respective recesses (3b2,20a2) for receiving said integrated pump attachment portion (40a) of said fuel pump (40).

4. Internal combustion engine according to claim 3, **characterized by** a sealing member (42) interposed between said recesses (3b2,20a2) and said integrated pump attachment portion (40a) of said fuel pump (40).

5. Internal combustion engine according to at least one of the preceding claims 1 to 4, **characterized in that** said fuel pump (40) comprising a fuel inlet portion (40d) and a fuel outlet portion (40e), said outlet portion being connected with said injector (33), and that said fuel pump (40) being drivable via a driven portion (40f) of said fuel pump (40) engaging a fore-end portion (11f) of said camshaft (11).

6. Internal combustion engine according to at least one of the preceding claims 1 to 5, **characterized in that** said cam cap (20) being provided with a cam sensor attachment portion (20c) located between said second pump attachment portion (20a) and a camshaft receiving portion (20b) supporting said camshaft (20), and that a cam sensor (85) being provided with another cam sensor attachment portion (85a) to connect said cam sensor (85) with said cam cap (20).

7. Internal combustion engine according to at least one of the preceding claims 1 to 6, **characterized in that** said first and second pump attachment portions (3b,20a) each being integrally formed with said cylinder head (3) and said cam cap (20), respectively.

8. Internal combustion engine according to claim 6 or 7, **characterized in that** said cam sensor attachment portion (20c) and said another cam sensor attachment portion (85a) each being integrally formed with said cam cap (20) and said cam sensor (85), respectively.

9. Internal combustion engine according to at least one of the preceding claims 6 to 8, **characterized in that** said cam sensor attachment portion (20c) of said cam cap (20) being inserted into an attachment hole (88) of a head cover (4).

10. Internal combustion engine according to claim 9, **characterized in that** said head cover (4) being supported by said cam sensor attachment portion (20c) of said cam cap (20).

11. Internal combustion engine according to at least one of the preceding claims 1 to 10, **characterized in that** said internal combustion engine is an in-line, three-cylinder internal combustion engine of the four-stroke cycle type.

## Patentansprüche

1. Brennkraftmaschine (1), die zumindest eine Nockenwelle (11, 12) mit Nocken (11a, 12a) aufweist, die Nockenwelle (11, 12) für eine Rotation an einem Zapfenlagerabschnitt (3g, 3h) eines Zylinderkopfes (3) und durch eine Nockenkappe (20) axial gelagert ist, eine Kraftstoffpumpe (40), um Kraftstoff zu einem Einspritzer (33) zum Einspritzen von Kraftstoff in eine Brennkammer (6) zuzuführen, wobei die Kraftstoffpumpe (40) durch die Nockenwelle (11) antreibbar ist, **dadurch gekennzeichnet, dass** die Kraftstoffpumpe (40) einen einstückigen Pumpen- Befestigungsabschnitt (40a), gegenüberliegend einem ersten Befestigungsabschnitt (3b) des Zylinderkopfes (3), und einen zweiten Befestigungsabschnitt (20a) der Nockenkappe (20) zum Befestigen der Kraftstoffpumpe (40) aufweist, und dass die Kraftstoffpumpe (40) an dem gegenüberliegenden ersten Befestigungsabschnitt (3b) des Zylinderkopfes (3) und an dem zweiten Pumpenbefestigungsabschnitt (20a) der Nockenkappe (20) verbunden ist.

2. Brennkraftmaschine nach Anspruch (1), **dadurch gekennzeichnet, dass** der erste und der zweite Pumpenbefestigungsabschnitt (3b, 20a) mittels Schrauben (70) befestigt sind.

3. Brennkraftmaschine nach Anspruch 1 oder 2, **dadurch gekennzeichnet, dass** der erste und der zweite Befestigungsabschnitt (3b, 20a) jeder mit jeweiligen Aussparungen (3b2, 20a2) zum Aufnehmen des einstücken Pumpenbefestigungsabschnittes (40a) der Kraftstoffpumpe (40) versehen ist.

4. Brennkraftmaschine nach Anspruch 3, **gekennzeichnet durch** ein Abdichtteil (42), eingesetzt zwischen die Aussparungen (3b2, 20a2) und den integrierten Pumpenbefestigungsabschnitt (40a) der Kraftstoffpumpe (40).

5. Brennkraftmaschine nach zumindest einem der vorhergehenden Ansprüche 1 bis 4, **dadurch gekennzeichnet, dass** die Kraftstoffpumpe (40) einen Kraftstoffeinlassabschnitt (40d) und einen Kraftstoffauslassabschnitt (40e) aufweist, der Auslassabschnitt (40e) mit dem Einspritzer (33) verbunden ist, und dass die Kraftstoffpumpe (40) über einen angetriebenen Abschnitt (40f) der Kraftstoffpumpe (40), der mit einem Vorderendabschnitt (11f) der Nockenwelle (11) im Eingriff ist, antreibbar ist.

6. Brennkraftmaschine nach zumindest einem der vorhergehenden Ansprüche 1 bis 5, **dadurch gekennzeichnet, dass** die Nockenkappe (20) mit einem Nockensensor- Befestigungsabschnitt (20c) versehen ist, angeordnet zwischen dem zweiten Pumpenbefestigungsabschnitt (20a) und einen Nockenwellen- Aufnahmeabschnitt (20b), der die Nockenwelle (20) lagert, und dass ein Nockensensor (85) mit einem weiteren Nockensensor- Befestigungsabschnitt (85a) versehen ist, um den Nockensensor (85) mit der Nockenkappe (20) zu verbinden.

7. Brennkraftmaschine nach zumindest einem der vorhergehenden Ansprüche 1 bis 6, **dadurch gekennzeichnet, dass** der erste und zweite Pumpenbefestigungsabschnitt (3b, 20a) jeweils mit dem Zylinderkopf (3) und der Nockenkappe (20) einstückig gebildet ist.

8. Brennkraftmaschine nach Anspruch 6 oder 7, **dadurch gekennzeichnet, dass** der Nockensensor- Befestigungsabschnitt (20c) und der weitere Nockensensor-Befestigungsabschnitt (85a) jeder mit der Nockenkappe (20) und dem Nockensensor (85) jeweils einstückig gebildet ist

9. Brennkraftmaschine nach zumindest einem der vorhergehenden Ansprüche 6 bis 8, **dadurch gekennzeichnet, dass** der Nockensensor- Befestigungsabschnitt (20c) der Nockenkappe (20) in eine Befestigungsbohrung (88) der Kopfabdekkung (4) eingesetzt ist.

10. Brennkraftmaschine nach Anspruch 9, **dadurch gekennzeichnet, dass** die Kopfabdeckung (4) durch den Nockensensor- Befestigungsabschnitt (20c) der Nockenkappe (20) gelagert ist.

11. Brennkraftmaschine nach zumindest einem der vorhergehenden Ansprüche 1 bis 10, **dadurch gekennzeichnet, dass** die Brennkraftmaschine eine Reihenmotor-Dreizylinder- Brennkraftmaschine vom Viertakt- Typ ist.

## Revendications

1. Moteur à combustion interne (1) comprenant au moins un arbre à cames (11, 12) avec des cames (11a, 12a), ledit arbre à cames (11, 12) étant supporté axialement pour une rotation sur une portion formant palier d'un tourillon (3g, 3h) d'une culasse de moteur (3) et par un chapeau de came (20), une pompe à carburant (40) pour alimenter en carburant un injecteur (33) destiné à injecter du carburant dans une chambre de combustion (6), ladite pompe à carburant (40) pouvant être entraînée par ledit arbre à cames (11), **caractérisé en ce que** ladite pompe à carburant (40) comprend une portion de fixation (40a) de la pompe intégrale opposée à une première portion de fixation (3b) de la culasse de moteur (3) et une deuxième portion de fixation (20a) du chapeau de came (20) pour fixer la pompe à carburant (40), et **en ce que** la pompe à carburant (40) est fixée à la première portion de fixation opposée (3b) de la culasse de moteur (3) et à la deuxième portion de fixation de la pompe (20a) du chapeau de came (20).

2. Moteur à combustion interne selon la revendication 1, **caractérisé en ce que** lesdites première et deuxième portions de fixation de la pompe (3b, 20a) sont fixées par des boulons (70).

3. Moteur à combustion interne selon la revendication 1 ou 2, **caractérisé en ce que** lesdites première et deuxième portions de fixation (3b, 20a) sont dotées chacune d'évidements respectifs (3b2, 20a2) pour loger ladite portion de fixation de pompe intégrée (40a) de ladite pompe à carburant (40).

4. Moteur à combustion interne selon la revendication 3, **caractérisé par** un élément d'étanchéité (42) interposé entre lesdits évidements (3b2, 20a2) et ladite portion de fixation de pompe intégrée (40a) de ladite pompe à carburant (40).

5. Moteur à combustion interne selon au moins l'une des revendications précédentes 1 à 4, **caractérisé en ce que** ladite pompe à carburant (40) comprend une portion d'admission de carburant (40d) et une portion de sortie du carburant (40e), ladite portion de sortie étant raccordée audit injecteur (33), et **en ce que** ladite pompe à carburant (40) pouvant être entraînée par une portion menée (40f) de ladite pompe à carburant (40) engage une portion d'extrémité avant (11f) dudit arbre à cames (11).

6. Moteur à combustion interne selon au moins l'une des revendications précédentes 1 à 5, **caractérisé en ce que** ledit chapeau de came (20) est doté d'une portion de fixation du capteur de came (20c) située entre ladite deuxième portion de fixation de pompe (20a) et une portion de logement de l'arbre à cames (20b) supportant ledit arbre à cames (20), et **en ce qu'**un capteur de came (85) est doté d'une autre portion de fixation de capteur de came (85a) pour raccorder ledit capteur de came (85) audit chapeau de came (20).

7. Moteur à combustion interne selon au moins l'une des revendications précédentes 1 à 6, **caractérisé en ce que** lesdites première et deuxième portions de fixation de pompe (3b, 20a) sont formées chacune d'une seule pièce avec ladite culasse de moteur (3) et ledit chapeau de came (20), respectivement.

8. Moteur à combustion interne selon la revendication 6 ou 7, **caractérisé en ce que** ladite portion de fixation du capteur de came (20c) et ladite autre portion de fixation du capteur de came (85a) sont formées chacune d'une seule pièce avec ledit chapeau de came (20) et ledit capteur de came (85), respectivement.

9. Moteur à combustion interne selon au moins l'une des revendications précédentes 6 à 8, **caractérisé en ce que** ladite portion de fixation du capteur de came (20c) dudit chapeau de came (20) est insérée dans un trou de fixation (88) d'un capot (4).

10. Moteur à combustion interne selon la revendication 9, **caractérisé en ce que** ledit capot (4) est supporté par ladite portion de fixation du capteur de came (20c) dudit chapeau de came (20).

11. Moteur à combustion interne selon au moins l'une des revendications précédentes 1 à 10, **caractérisé en ce que** ledit moteur à combustion interne est un moteur à combustion interne en ligne, à trois cylindres de type à quatre temps.
